# EUROPEAN PATENT SPECIFICATION

(11) **EP 0 647 794 B1**
(45) Date of publication and mention of the grant of the patent: **29.12.1997**
(21) Application number: 94202778.0
(22) Date of filing: 27.09.1994
(51) Int. Cl.: F16F 7/12, B60R 19/34

(54) **Energy-absorbing structure**
Energieabsorbierende Struktur
Elément de déformation

(30) Priority: 12.10.1993 NL 9301763
(43) Date of publication of application: 12.04.1995
(73) Proprietor: Netherlands Car B.V., 5708 HT Helmond (NL)
(72) Inventor: Houtzager, Kees, NL-5591 PA Heeze (NL)
(74) Representative: Timmers, Cornelis Herman Johannes

(56) References cited:
- DE-A- 2 213 323
- DE-A- 3 711 692

## Description

The invention relates to an energy-absorbing structure as defined in the preamble of claim 1 and known in itself from DE-3 711 692 A1.

In this known energy-absorbing structure the energy absorbing inverter tube - which is, as such, also known in itself - surrounds the body of a rigid cylinder which accommodates a piston, slidable in this cylinder against the force of a spring element. The piston is connected at its front end to the structural element which can be subjected to a force of which the energy must be absorbed.

This known structure has the drawback that the cylindrical element must be fixed to the front end of the inverter tube in such a way that during the backwards movement of the cylindrical element, which takes place when a force is exerted on it, the front end of the inverter tube is also pulled backwards. This complicates the structure because the cylindrical element must at its front end be provided with a collar which has to be welded to the front end of the inverter tube.

The invention aims to obviate this drawback and according to the invention this is obtained in that the second end of the inverter tube is connected non elastically to the structural element on which loads can be exerted while the guide element is a simple guide tube.

Thus according to the invention the structural element which is subjected to the loading is connected directly to the front end of the inverter tube and pushes this front end backwards, taking the guide tube with it. Not only is the structure simpler and cheaper but replacing damage parts is also easier and thus faster.

A preferred embodiment is described in claim 2. This embodiment has the advantage that an even more uniform energy-absorption is obtained; when the loadable structure element is subjected to a relatively weak loading the connecting element will be the first to deform by the folding over of the pliably deformable wall thereof, which wall is then subjected to tensile stresses when it has been fully folded over and thereafter transmits the force, acting upon it, to the inverter tube.

Preferably one will then also use a short, force-introduction tube part disposed on the second end inside the inverter tube, and projecting into the deformable connecting element.

The energy-absorbing structure according to the invention will preferably be used between the bumper of a car and the rest of the body of the car. In this case there will often be a situation in which the position of the inverter tube is essentially horizontally, while the contact face of the bumper includes at angle with the vertical. In order to make it possible for the bumper to execute a rotational movement round a horizontal axis when it is impact-loaded, the connecting element is in that case made asymmetrically conical, with the greatest surface zone on, for example, the top side. When the bumper is now subjected to a load, this large surface zone will the first to deform, so that the bumper firstly rotates about a horizontal axis until its front face is virtually vertical, following which the remaining deformation of the whole combination will take place.

The invention will be elucidated on the hand of the enclosed drawing. Therein show in cross-section:
Figure 1 the main parts of the energy-absorbing structure according to the invention;
Figures 2a to 2f inclusive five stages of compression of this structure;
Figures 3a to 3c inclusive a second embodiment, in the undeformed, semi-deformed and totally deformed states respectively.

The energy-absorbing structure 2 shown in the figures comprises as the main deformable - and thus energy-absorbing - element a so-called inverter tube 4, which is known per se, which inverter tube is constructed with an end 6 which is cut off straight (shown on the left in the figures), while at the other end 8 a part 10 is folded over towards the end 6 and has its edge 12 anchored to a fixed structural part 14. Such an inverter tube is known per se.

The disadvantage of this known design is that when forces are exerted on the end 6, which exertion of forces leads to a progressive folding over of the tube 4 at the other end 8, the direction of in which the tube is going to move is quite indeterminate. It is clear that this is a great drawback.

Now according to the invention, this disadvantage is overcome by fitting a second tube inside the first tube, said second tube being a guide tube 16 which, when forces are excerted on the tube end 6, which lead to folding over of the part 10, follows the movement to the right of the tube 4 and which at 18 is guided into a guide flange 20 formed on the plate 22; this plate is fixed to supporting bars 24, which form a part of the fixed structure. The direction of movement of the inverter tube 4 is thus also predictable and predetermined.

The abovementioned structure is preferably combined with a truncated conical connecting element 26 which is designed with a foldable conical wall 28, which wall at the end with its smallest diameter is connected by way of an annular part 30 to the tube end 6, and at the other end is connected by way of a peripheral edge 32 to a structural element 34, in this case a car bumper. The whole combination is intended to absorb external forces exerted on this structural element (bumper) which have at least one component in directed the direction of the arrow 36, and thus for absorbing energy by the deformation of the energy-absorbing structure of the invention.

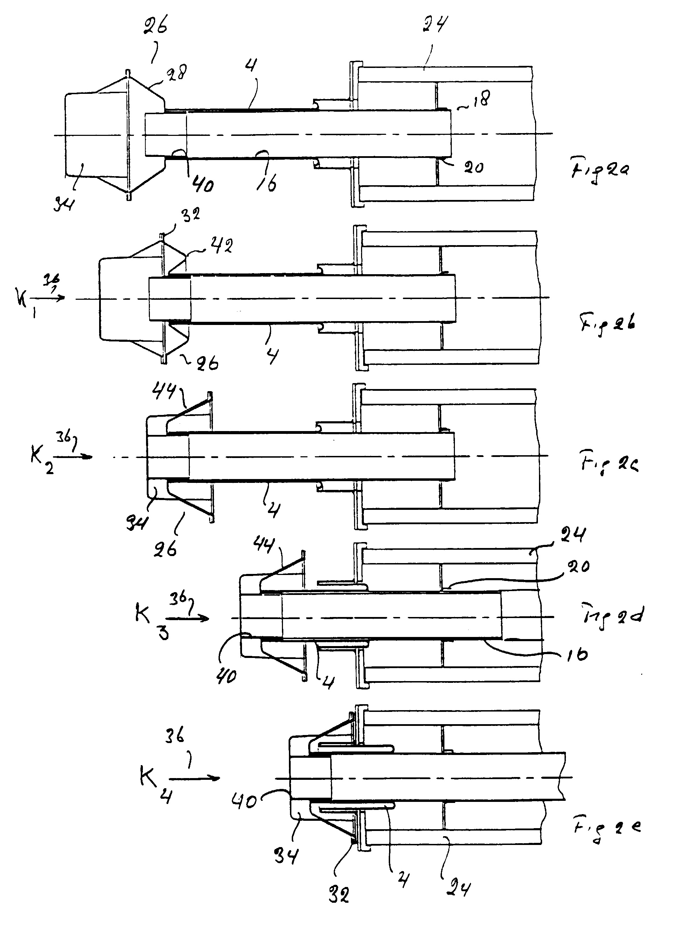

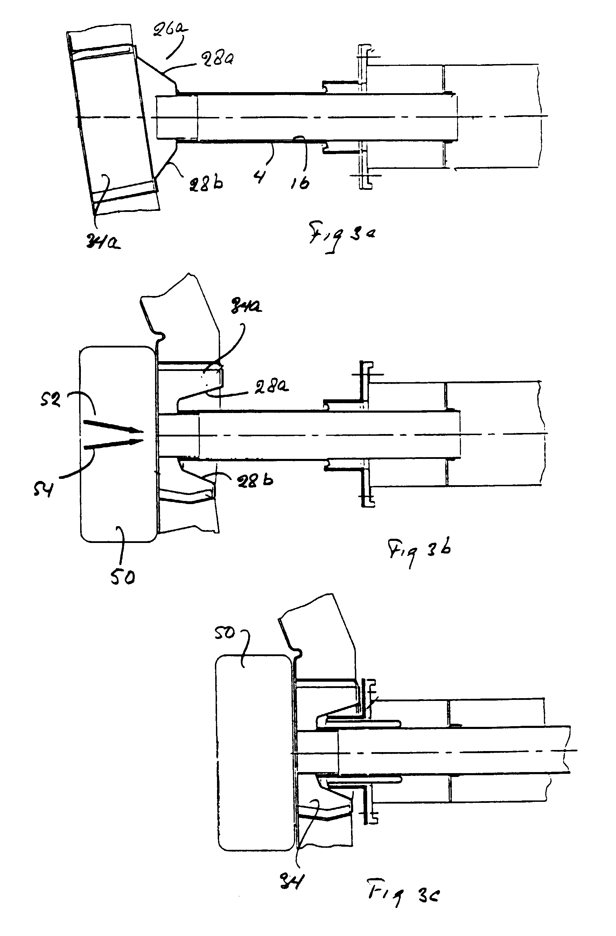

It is pointed out that Figures 2a - 2f and Figure 3 show an embodiment in which the tube 16 ends a short distance from the conical connecting element 26, and where between this conical connecting element 26 and the inverter tube 4 a short force introduction tube branch 40 is fitted, which tube branch has a heavier structure than the tube 16, since the latter need only to perform a guiding function.

Figure 2a shows the whole combination without any load being excerted upon it. When a force having a component K is exerted on the bumper 34 in the direction of the arrow 36, the conical wall 28 of the connecting element 26 will in the first instance fold over inwards at the point as indicated at 42, resulting in the situation shown in Figure 2b. If the force K is a stronge one is the case in the situation according to Figure 2c, the connecting element 26 will be folded over fully conically, as indicated by 44 in Figure 2c. Note that the inverter tube 4 is not yet deformed; thus when the whole is repaired only the relatively cheap connecting element 26 need be replaced and not much work will be necessary.

An even stronger force K3 will be transmitted through the wall part 44, which is now under tensile stresses, and through the tube branch 40 to the inverter tube 4, which will begin to deform in the manner shown in Figure 2d. As can be seen from this figure, during the deformation of the inverter tube 4 the direction in which the tube 4 moves is exactly determined by the supporting tube 16 which is guided in the guide 20, which is in its turn connected to the fixed structure 24, resulting in a quite predictable behaviour of the energy-absorbing structure.

Finally, Figure 2e shows the maximum achievable deformation of this structure: the inverter tube 4 is deformed over the maximum distance, and the edge 32 of the conical connecting element 26 rests against the front edge of the fixed structure 24. During repair both the conical connecting element 26 and the inverter tube 4 with its guide tube 16 will now have to be replaced.

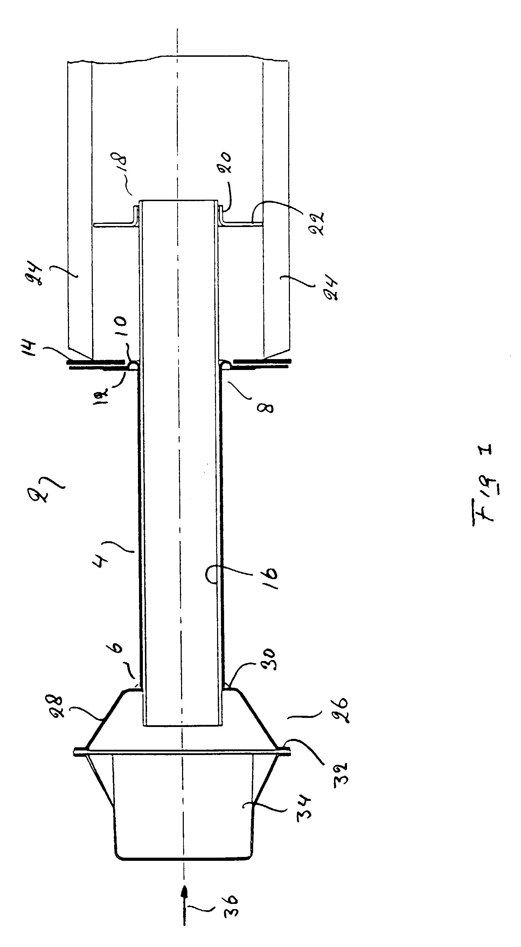

Figures 3a, 3b and 3c show in longitudinal section a somewhat modified embodiment. The difference from the embodiment shown in Figures 2a to 2e lies in the design of the connecting element 26. While in the embodiment shown in Figures 1 and 2a - 2e said connecting element is symmetrical, in the embodiment shown in Figures 3a - 3c it is asymmetrical: the top wall zone 28a of the connecting element 26a takes up a larger area than the bottom wall zone 28b. The result is that, when it hits an obstacle 50 (Figure 3b) sothat forces are exerted in the direction of the arrows 52, 54, the bumper 34a, which is placed under a slight angle, can rotate about an imaginary axis which lies at right angles to the plane of the drawing, resulting in the situation as shown in Figure 3b. In the course of this, the connecting element 26a undergoes a deformation which takes the wall parts 28a, 28b into a situation corresponding to the one is shown in Figure 2c, so that said wall parts are now under tensile stresses. Finally, Figure 3c shows a situation corresponding to that explained with reference to Figure 2e, i.e. a situation in which the entire energy-absorbing structure is deformed.

## Claims

1. Energy-absorbing structure (2), comprising an energy-absorbing inverter tube (4) which is anchored at a first end (8), and the second end (6) of which is coupled to a structural element on which a force (K) acting in the longitudinal direction of the tube (4) can be exerted, and by a cylindrical guide element (16) fitted inside the inverter tube (4), the first end of which, directed away from the structural element, is guided slidingly in a guide collar (29) situated behind the first end of the inverter tube, as seen in the direction of movement thereof, characterized in that the second end of the inverter tube (4) is connected non-elastically to the structural element (34) on which loads can be exerted and the guide element is a simple guide tube.

2. Structure according to Claim 1, characterised in that the second end of the inverter tube (4) is connected to the narrow top face of a hollow, truncated conical connecting element (26) which is connected by the base peripheral edge to the loadable structural element (34), and the wall of which is pliably deformable.

3. Structure according to Claim 2, characterised by a short force introduction tube part (40) disposed on the second end inside the inverter tube, and projecting into the deformable connecting element (26).

4. Structure according to Claim 2-3, characterised in that the connecting element (26a) is asymmetrically conical.

## Patentansprüche

1. Energie absorbierender Aufbau (2)
- mit einem Energie absorbierenden Invertierrohr (4), das an einem ersten Ende (8) festgelegt ist, und dessen zweites Ende (6) mit einem Bauelement verbunden ist, auf das eine in Längsrichtung des Rohres (4) wirkende Kraft (K) ausgeübt werden kann, und
- mit einem zylindrischen Führungselement (16), das im Inneren des Invertierrohres (4) angeordnet ist, und dessen erstes, von dem Bauelement weggerichtetes Ende in einem Führungsbund (29) gleitend verschiebbar geführt ist, der sich hinter dem ersten Ende des Invertierrohres gesehen in dessen Bewegungsrichtung befindet,
dadurch gekennzeichnet, daß
- das zweite Ende des Invertierrohres (4) mit dem Bauelement (34), auf welches Belastungen ausgeübt werden können, nicht elastisch verbunden ist und
- daß das Führungselement ein einfaches Führungsrohr ist.

2. Aufbau nach Anspruch 1, dadurch gekennzeichnet, daß das zweite Ende des Invertierrohres (4) mit der kleinen oberen Fläche eines hohlen kegelstumpfförmigen Verbindungselements (26) verbunden ist, das mit dem Umfangsrand seiner Basis mit dem belastbaren Bauelement (34) verbunden ist und dessen Wand biegbar verformbar ist.

3. Aufbau nach Anspruch 2, gekennzeichnet durch einen kurzen Krafteinführungs-Rohrteil (40), der an dem zweiten Ende innerhalb des Invertierrohres angeordnet ist und in das verformbare Verbindungselement (26) vorsteht.

4. Aufbau nach Anspruch 2 bis 3, dadurch gekennzeichnet, daß das Verbindungselement (26a) asymmetrisch konisch ist.

## Revendications

1. Structure (2) d'absorption de l'énergie, comportant un tube (4) inverseur d'absorption de l'énergie qui est ancré à une première extrémité (8), et dont la seconde extrémité (6) est couplée à un élément de structure sur lequel une force (K) agissant suivant la direction longitudinale du tube (4) peut être exercée, et la première extrémité du tube (4) inverseur, dirigée dans la direction s'éloignant de l'élément de structure, est guidée par coulissement, par l'intermédiaire d'un élément (16) de guidage cylindrique adapté à l'intérieur du tube (4) inverseur, dans une bague (29) de guidage située derrière la première extrémité du tube inverseur, vu suivant la direction de son déplacement, caractérisée en ce que la seconde extrémité du tube (4) inverseur est reliée de manière non élastique à l'élément (34) de structure sur lequel des charges peuvent être exercées et l'élément de guidage est un simple tube de guidage.

2. Structure suivant la revendication 1 caractérisée en ce que la second extrémité du tube (4) inverseur est reliée à la face supérieure étroite d'un élément (26) de liaison conique tronqué creux qui est relié par le bord périphérique de base à l'élément (34) de structure pouvant recevoir une charge et dont la paroi est déformable par pliage.

3. Structure suivant la revendication 2, caractérisée par une petite pièce (40) de tube d'introduction de force disposée sur la seconde extrémité à l'intérieur du tube inverseur, et faisant saillie dans l'élément (26) de liaison déformable.

4. Structure suivant l'une des revendications 2 à 3 caractérisée en ce que l'élément (26a) de liaison est dissymétriquement conique.
